(19) Europäisches Patentamt
European Patent Office
Office européen des brevets

(11) EP 2 097 563 B1

(12) **EUROPEAN PATENT SPECIFICATION**

(45) Date of publication and mention of the grant of the patent:
**19.10.2011 Bulletin 2011/42**

(21) Application number: **07851785.1**

(22) Date of filing: **26.12.2007**

(51) Int Cl.:
***D01F 2/00*** *(2006.01)* ***D01F 6/50*** *(2006.01)*
***D01F 1/02*** *(2006.01)* ***D01F 1/10*** *(2006.01)*

(86) International application number:
**PCT/KR2007/006842**

(87) International publication number:
**WO 2008/078961 (03.07.2008 Gazette 2008/27)**

(54) **COMPOSITE FIBER OF CELLULOSE-POLYVINYLALCOHOL AND PREPARATION METHOD THEREOF**

VERBUNDFASER AUS CELLULOSE-POLYVINYLALKOHOL SOWIE HERSTELLUNGSVERFAHREN DAFÜR

FIBRE COMPOSITE DE CELLULOSE-ALCOOL POLYVINYLIQUE ET SON PROCÉDÉ DE FABRICATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.12.2006 KR 20060133760**

(43) Date of publication of application:
**09.09.2009 Bulletin 2009/37**

(60) Divisional application:
**10013555.7 / 2 292 815**

(73) Proprietor: **Kolon Industries, Inc.**
**Kwacheon-city**
**Kyungki-do**
**427-709 (KR)**

(72) Inventors:
- **OH, Young-Se**
  **Busan 616-120 (KR)**
- **KIM, Gi-Woong**
  **Daegu 706-010 (KR)**
- **KIM, Woo-Chul**
  **Chilgok-gun**
  **Gyeongsangbuk-do 718-841 (KR)**
- **KIM, Si-Min**
  **Daegu 704-140 (KR)**

(74) Representative: **Merkle, Gebhard**
**TER MEER STEINMEISTER & PARTNER GbR,**
**Patentanwälte**
**Mauerkircherstrasse 45**
**81679 München (DE)**

(56) References cited:
**EP-A1- 1 493 753** **EP-A2- 0 438 635**
**KR-A- 20020 077 611** **KR-A- 20050 003 124**
**KR-A- 20050 003 126** **KR-B1- 100 575 378**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 097 563 B1

## Description

## CROSS REFERENCES TO RELATED APPLICATION

This application claims priority to and the benefit of Korean Patent Application No. 10-2006-0133760 filed in the Korean Industrial Property Office on December 26, 2006

## BACKGROUND OF THE INVENTION

### (a) Field of the Invention

The present invention relates to a cellulose/polyvinylalcohol composite fiber and a preparation method thereof.

### (b) Description of the Related Art

Cellulose has a crystalline structure that is constructed by strong hydrogen bonds between molecular chains or the interior of the molecular chain, and thus it is difficult to dissolve the cellulose with a common solvent. Generally, N-methylmorpholine-N-oxide (hereinafter "NMMO"), which is capable of destroying the crystalline structure, is used as a solvent for dissolving cellulose.

A process of preparing a cellulose fiber by using a solution, wherein the cellulose is dissolved in the NMMO, has benefits of less energy consumption and less use amount of water, in comparison with a general process of preparing polyester and viscose rayon, because the NMMO can be recycled. Furthermore, unlike the viscose rayon process, the process using the NMMO has less problems of air pollution or water pollution, because the NMMO is atoxic and nearly all of the NMMO can be recovered and recycled

U.S. Patent No. 2,179,181 (Graenacher et al.) firstly suggested such a method of preparing the cellulose fiber, and the following technologies are known as conventional methods of preparing the cellulose solution by using the NMMO solvent.

U.S. Patent Nos. 4,142,913 and 4,144,080 suggested a method of dissolving the cellulose by mixing cellulose pulp sheets with the NMMO solvent (the percentage of water content: 22 wt%) and swelling them, and then eliminating the excess water included in the composition by distillation. The method can provide settled working conditions, because the cellulose is previously swelled sufficiently, and then the solution, which can be fiberized, is prepared by distilling water under a decompressed condition in the method. However, the method needs a long dissolving time and have some disadvantages in that the cellulose decomposes and the NMMO discolors.

U.S. Patent No. 4,211,574 discloses a method of preparing the solution by dipping pulp sheets in the liquefied NMMO solvent (water content: 15 wt%) at 85-95 ˚C, which is over the boiling point thereof, swelling them, and then stirring and heating them without thickening. The method, however, has a disadvantage in that a homogeneous solution cannot be prepared because gel films are formed on the surface of the pulp sheets, and the gel films prevent the NMMO solvent from penetrating into the pulp sheets.

U.S. Patent No. 5,584,919 discloses the method of preparing the solution by milling and blending the solid state NMMO (melting point: 78˚C) and the pieces of the cellulose pulp in a mill at 50-60 ˚C so as to make pelletized mixed granules, and introducing the granules into an extruder so as to prepare the solution. The method, however, has a disadvantage in that it is difficult to prepare and handle the solid state NMMO and it is also difficult to apply the method to a continuous process.

Furthermore, the following technologies are known as methods of preparing the cellulose fiber by using cellulose, NMMO solvent, and a polymer resin.

U.S. Patent Nos. 3,447,939, 3,508,941, and 4,255,300 suggested the methods of preparing the cellulose fiber by using a solution wherein the cellulose and the polyvinylalcohol (PVA) are dissolved in the NMMO.

Furthermore, U.S. Patent No. 6,245,837 discloses that the fibers having the strength of 27cN/tex can be made by dissolving the cellulose and a mixture of polyethylene, polyethyleneglycol, polymethylmethacrylate, polyacrylamide, and the like into the NMMO. However, the method has a disadvantage in that the strength of the cellulose fibers prepared by the method is too low to be used for a common industry or a tire cord.

Korean Patent Publication No. 2005-0003124 discloses the cellulose/polyvinylalcohol composite fiber prepared by blending 0.1 to 30 wt% of polyvinylalcohol with cellulose. However, the method cannot be applied to an industrial application because the polyvinylalcohol blended in the dope is eluted into the washing bath and it is difficult to recycle the NMMO.

KR 100575378 B1 discloses a manufacturing method of cellulose fiber comprising the steps of: dissolving salt of 0.1 - 10 wt.%, mixing, swelling and dissolving the NMMO solution and cellulose powder to manufacture a cellulose solution; extruding and spinning the cellulose solution with a spinning nozzle having 500-2000 number of orifices, passing

the spun cellulose solution through an air layer to transfer the cellulose solution to a coagulation bath, and coagulating the cellulose solution to manufacture multifilament; and washing, drying and winding the multifilament.

KR 1020020077611 A discloses a process of preparing a cellulose fiber where a solution of 5 to 12 % by weight of cellulose, 80 to 94.5 % by weight of an N-methylmorpholine-N-oxide solution and 0.8 to 8 % by weight of polyvinyl alcohol having a polymerization degree of 1,500 to 5,000 is melted in a kneader, static mixer or screw extruder at 80 to 100 °C to be dissolved in a paste phase and then melt-spun. A syndiotactic diad content in polyvinyl alcohol is 50 to 70 %.

## SUMMARY OF THE INVENTION

It is an aspect of the present invention to provide a cellulose/polyvinylalcohol composite fiber satisfying the properties needed for an industrial fiber, and a method of preparing the same in which the elution rate of polyvinylalcohol is low during the washing process and it is easy to collect and recycle the solvent.

Furthermore, it is another aspect of the present invention to provide a tire cord prepared by using the cellulose/polyvinylalcohol composite fibers.

In order to attain these objects, the present invention provides a cellulose/polyvinylalcohol composite fiber, including cellulose and polyvinylalcohol in a weight ratio of 70:30 to 99:1, wherein the polyvinylalcohol includes a syndiotactic diad groups in an amount of from 53 to 60% and the degree of saponification thereof is at least 99.0%.

According to the present invention, it is preferable that the cellulose/polyvinylalcohol composite fiber has dry strength of from 6 to 10 g/d, dry elongation of from 6 to 13%, and a dry modulus of 150 to 400 g/d.

The present invention also provides a method of preparing a cellulose/polyvinylalcohol composite fiber, including the steps of: i) preparing a dope by dissolving a powder mixture of cellulose and synthiotactic polyvinylalcohol in a weight ratio of 70:30 to 99:1 into N-methylmorpholine-N-oxide; ii) extrusion spinning the dope through spinning nozzles; and iii) washing the spun filaments.

According to the present invention, the elution rate of polyvinylalcohol is preferably 5% or less in step iii) of washing.

The present invention also provides a tire cord prepared by using the cellulose/polyvinylalcohol composite fiber.

## DETAILED DESCRIPTION OF THE EMBODIMENTS

Hereinafter, the present invention is explained in more detail.

The present inventors identified that the polyvinylalcohol is not eluted and the solvent can be collected and recycled, and it is possible to prepare a composite fiber having good strength, elongation, and flexibility by granting some properties to polyvinylalcohol, which is used for preparing the cellulose fiber, or by using a cross-linking agent in the solidifying step after spinning the dope, and then accomplished the present invention.

Such method of the present invention is characterized by using polyvinylalcohol of which the content of a syndiotactic diad groups is from 53 to 60%, the viscosity-average degree of polymerization is from 1500 to 7000, and the degree of saponification is at least 99.0%, so as to prepare the cellulose/polyvinylalcohol composite fiber.

Hereinafter, the cellulose/polyvinylalcohol composite fiber according to the first embodiment of the present invention and the method of preparing the same are explained.

The cellulose/polyvinylalcohol composite fiber according to the present invention includes cellulose and polyvinylalcohol.

The powders of cellulose and polyvinylalcohol, which are raw materials of the composite fiber, can be used by mixing them with each other. At this time, the cellulose and the polyvinylalcohol are mixed in a weight ratio of 70:30 to 99:1. Namely, it is preferable that the polyvinylalcohol is included in an amount of 1 wt% or more so that the composite fiber has the properties needed for the present invention, and it is preferable that the polyvinylalcohol is included in an amount of 30 wt% or less so as to prevent the deterioration of the properties caused by excess polyvinylalcohol because the miscibility of the two components is poor.

Conventional cellulose in the related art of the present invention may be used as the cellulose, however the content of $\alpha$-cellulose is preferably at least 94%, more preferably at least 96%, and southern pine pulp having at least 96% of $\alpha$-cellulose and the wood pulp having at least 96% of $\alpha$-cellulose may be most preferably used for improving the properties of the composite fiber.

Particularly, it is preferable to use the polyvinylalcohol, of which the content of syndiotactic diad groups is from 53 to 60%, in the present invention.

The content of syndiotactic diad groups of the polyvinylalcohol can be measured by $^1$H-NMR spectrum and calculated according to the following Equation 1. In the NMR spectrum, three peaks presented between 4-5 ppm are the peaks of hydroxyl group (-OH), and the peak at 4.65 ppm represents an isotactic triad group (hereinafter "mm"), the peak at 4.43 ppm represents a heterotactic triad group (hereinafter "mr"), and the peak at 4.22 ppm represents a syndiotactic triad group (hereinafter "rr"). Herein, m means an isotactic diad and r means a syndiotactic diad. In the case

of general PVA, mm=1, mr=2.28, and rr=1.40 in $^1$H-NMR, and thus the rate of mm is about 21.37%, the rate of mr is about 54.27%, and the rate of rr is about 29.91%.

[Equation 1]

The content of syndiotactics (%) = (the rate of rr) + [0.5×(the rate of mr)].

Namely, the polyvinylalcohol of the present invention is syndiotactic polyvinylalcohol, of which the content of syndiotactic diad groups is from 53 to 60%, and the syndiotactic polyvinylalcohol has better water- and chemical-resistance in comparison with the heterotactic polyvinylalcohol.

Furthermore, it is preferable that the degree of saponification of the syndiotactic polyvinylalcohol is at least 99.0 %. Namely, when the degree of saponification of the syndiotactic polyvinylalcohol does not satisfy the range, the water-resistance is poor and the polyvinylalcohol may be eluted into the washing bath, and thus it costs much to collect the NMMO.

Furthermore, the viscosity-average degree of polymerization is from 1500 to 7000 for the same reason above-mentioned.

As disclosed above, the polyvinylalcohol of the present invention means the syndiotactic polyvinylalcohol, of which the content of syndiotactic diad groups is from 53 to 60% and the degree of saponification is at least 99.0 %.

Even though the degree of saponification of the syndiotactic polyvinylalcohol is 99.0% or more, when the content of the syndiotactic diad groups is less than 53%, the mixed polyvinylalcohol is eluted into the washing liquid during the washing process and thus it is difficult to collect the solvent and the properties needed for the present invention cannot be obtained. Furthermore, when the content of the syndiotactic diad groups is over 60% the tensile properties of the prepared fiber are good, however it is industrially disadvantageous because the flexibility of the fiber is poor and it is very expensive to prepare polyvinylalcohol of which the content of the syndiotactic diad groups is over than 60%.

The method of preparing the cellulose/polyvinylalcohol composite fiber according to the present invention includes the steps of: i) preparing a dope by dissolving a powder mixture of cellulose and synthiotactic polyvinyl alcohol in a weight-ratio of 70:30 to 99:1 into N-methylmorpholine-N-oxide; ii) extrusion spinning the dope through spinning nozzles; and iii) washing the spun filaments.

In the method of preparing the composite fiber according to the present invention, except that the synthiotactic PVA is used, the composite fiber can be prepared by well-known methods in the related art of the present invention. Therefore, the method is not particularly limited, and the examples of the method are as follows.

First, the dope of step i) can be prepared by mixing a powder mixture of cellulose and polyvinylalcohol (hereinafter "a raw material mixture") and a solvent and dissolving them homogeneously. The powders of cellulose and synthiotactic polyvinylalcohol are mixed in a weight ratio of 70:30 to 99:1. Subsequently, the homogeneous dope can be prepared by introducing the powder mixture of cellulose and polyvinylalcohol (hereinafter "a raw material mixture", feeding speed: 100 to 800 g/h) and the solvent (feeding speed: 1000 to 8000 g/h) into an extruder, and mixing, swelling, and dissolving the raw material mixture.

The solvent may be a conventional solvent in the related art of the present invention, and is not particularly limited. However, N-methylmorpholine-N-oxide (NMMO) can preferably be used.

At this time, the content of the solvent is preferably 300 to 1900 parts by weight based on 100 parts by weight of the raw material mixture, and more preferably 500 to 1200 parts by weight. Namely, it is preferable that the content of the solvent is 300 parts by weight or more based on 100 parts by weight of the raw material mixture, in order to dissolve the raw material mixture and prepare a homogeneous solution, and it is preferable that the solvent is included in an amount of 1900 parts by weight or less, considering the final properties of the fiber and the economic feasibility.

Furthermore, the water content in the solvent is preferably 7 to 15 wt%. Namely, the water content in the solvent is preferably 7 wt% or more so as to prevent elevation of the melting temperature of the solvent and the preparing temperature caused by the excessive water content, and the water content in the solvent is preferably 15 wt% or less so as to secure the minimum solubility and the swellability of the raw material mixture.

Particularly, it is preferable that the swelling and dissolving process of the raw material mixture is primarily proceeded by dispersing the raw material mixture in the solvent while controlling the water content in the solvent to be 10 to 50%, and then swelling and dissolving the raw material mixture at the same time with lowering the water content in the solvent to be 7 to 15%.

Subsequently, step ii) extrusion spinning the dope through spinning nozzles is carried out.

It is preferable that the temperature of the extruder is maintained at 40 to 130˚C, and it is more preferable to use a twin-extruder having a feeding zone, a mixing zone, a dissolving zone, and a transferring zone. Herein, it is most preferable that the temperature of each zone of the twin-extruder is as follows: the feeding zone is at 90 ˚C; the mixing

zone is at 100 ˚C; the dissolving zone is at 120 ˚C; and the transferring zone is at 110 ˚C.

Furthermore, in addition to the method of using the extruder, the method, that dissolves the raw material mixture in a thin film rectifier after mixing and swelling the raw material mixture in a kneader or a storage tank, can be used as the method of spinning the raw material mixture while dissolving the same homogeneously.

At this time, when the water content in the solvent is 7 to 15 wt%, it is preferable to dissolve the raw material mixture according to the above method, and when the water content in the solvent is 20 to 50 wt%, it is preferable to dissolve the raw material mixture by eliminating the excess water in a conventional thin film rectifier or a vacuum kneader, after swelling the raw material mixture in a kneader or a tank.

Subsequently, step iii) washing the filaments spun as the above statements is carried out. The washing step can be carried out according to the conventional method in the related art of the present invention and it is not particularly limited.

According to the present invention, the elution rate of the polyvinylalcohol according to the following Calculation Formula is preferably 5% or less, considering the convenience of collecting and recycling the solvent after washing.

[Calculation Formula]

$$\text{Elution rate}(\%) = \frac{\text{weight of eluted PVA in the washing bath}}{\text{weight of PVA in the mixture of raw material}}$$

Namely, the method of preparing the cellulose/polyvinylalcohol composite fiber according to the present invention has an advantage that it is easy to collect and recycle the solvent, because the method uses the raw material mixture with the above content and thus the elution rate of polyvinylalcohol is low in the washing step.

The composite fiber according to the present invention prepared by the above method and with the content has dry strength of from 6 to 10 g/d, dry elongation of from 6 to 13%, and a dry modulus of from 150 to 400 g/d.

Furthermore, the polyvinylalcohol having the degree of saponification of at least 99.0% is used in the present invention in order to prevent the deterioration of the water-resistance and the orientation, and the elution of the polyvinylalcohol into the washing bath during the cross-linking and solidifying process of the composite fiber.

Furthermore, the viscosity-average degree of polymerization of the polyvinylalcohol is preferably from 1500 to 7000. Namely, the viscosity-average degree of polymerization of the polyvinylalcohol is preferably 1500 or more so as to satisfy the minimum properties needed for the composite fiber, and the viscosity-average degree of polymerization is preferably 7000 or less so as to prevent the deterioration of the flexibility of the composite fiber.

Furthermore, the present invention provides a tire cord prepared by using the cellulose/polyvinylalcohol composite fiber according to the invention having the above characteristics.

For example, the tire cord can be prepared according to the method of preparing a raw cord by twisting the cellulose/polyvinylalcohol composite fibers prepared by the above method with a twister, weaving the same with a weaving machine, and dipping the same into a dipping solution. The tire cord is not only prepared by the above method but is also prepared by a conventional method in the related art of the present invention.

As explained above, according to the present invention, it is possible to reduce the elution of polyvinylalcohol during the washing step and it is easy to collect and recycle the solvent by using the polyvinylalcohol having syndiotactic diad groups of a specific content and the composite fiber prepared by the method has good dry strength, dry elongation, and dry modulus.

Hereinafter, preferable examples and comparative examples are presented for understanding the present invention. However, the following examples are only for illustrating the present invention and the present invention is not limited to or by them.

**[Examples and Comparative Examples]**

**Example 1**

First, cellulose (the content of α-cellulose was 96% or more; V-81, Buckeye Co.) sheets were introduced into a pulverizer equipped with a screen filter, and made into powder. Syndiotactic polyvinylalcohol powder was prepared by low-temperature radical polymerizing the monomer mixture containing vinylpivalate and vinylacetate in a molar ratio of 10:90 (refer to Won Seok Lyoo, et. al., Macromolecules 2001, 34, p2964-2972) and saponifying the same. Then, the content of syndiotactic diad groups in the polyvinylalcohol was 54%, the degree of polymerization thereof was 4000, and the degree of saponification thereof was 99.6%. The powder of cellulose and polyvinylalcohol was introduced into a mixer in a weight ratio of 95:5.

Subsequently, the mixed powder of cellulose and polyvinylalcohol (feeding speed = 660 g/h) and liquefied

NMMO (89 ˚C, mono-hydrate, water content: 13%, feeding speed = 6000 g/h) were introduced into a twin-extruder (diameter of the screws (D) = 48mm, L/D = 52), the mixture was dissolved homogeneously with a screw speed of 120 rpm, and then the dissolved mixture was spun through the spinning nozzles (diameter: 0.2 mm, orifice: 1000 ea) in order to prepare the cellulose/polyvinylalcohol composite fibers.

**Example 2**

The composite fibers were prepared substantially according to the same method as in Example 1, except that the viscosity-average degree of polymerization of the syndiotactic polyvinylalcohol was 1700.

**Example 3**

The composite fibers were prepared substantially according to the same method as in Example 1, except that the weight ratio of the cellulose and the syndiotactic polyvinylalcohol was 80:20.

**Example 4**

The composite fibers were prepared substantially according to the same method as in Example 1, except that the weight ratio of the cellulose and the syndiotactic polyvinylalcohol was 90:10.

**Comparative Example 1**

The composite fibers were prepared substantially according to the same method as in Example 1, except that only the cellulose was used as the raw material without blending the syndiotactic polyvinylalcohol.

**Comparative Example 2**

The composite fibers were prepared substantially according to the same method as in Example 1, except that the polyvinylalcohol (C-17L, Shin-Etsu Co.), of which the content of syndiotactic diad groups was 49.6%, the viscosity-average degree of polymerization was 1700, and the degree of saponification was 99.7%, was used.

**Comparative Example 3**

The composite fibers were prepared substantially according to the same method as in Example 1, except that the weight ratio of the cellulose and the syndiotactic polyvinylalcohol was 99.5:0.5.

**Comparative Example 4**

The composite fibers were prepared substantially according to the same method as in Example 1, except that the weight ratio of the cellulose and the syndiotactic polyvinylalcohol was 65:35.

**Comparative Example 5**

The composite fibers were prepared substantially according to the same method as in Example 1, except that the degree of saponification of the syndiotactic PVA was 89%.

**[Experimental Example 1]**

The properties of the polyvinylalcohol used and the cellulose/polyvinylalcohol composite fibers prepared in Examples 1-4 and Comparative Examples 1-5 were measured according to the following methods, and the results are listed in Table 1.

**Properties of the Polyvinylalcohol**

**1) viscosity-average degree of polymerization ($DP_w$)**

First, the intrinsic viscosity ($\eta_{sp}$) was measured by using an Ubbelohde Viscometer (No.1, Fisher Corporation). At this time, dimethyl sulfoxide (DMSO) was used as a solvent, and the test was carried out at a temperature of 25±0.01

°C between the viscosity range of 0.1 to 0.6 g/dℓ, and the intrinsic viscosity ($\eta_{sp}$) was calculated from the concentration (C) and the specific viscosity ($r_{sp}$) according to the following Equation 2.

Subsequently, the viscosity-average degree of polymerization ($DP_w$) was calculated from the intrinsic viscosity ($\eta_{sp}$) data measured by the method according to the Mark-Houwink equation of the following Equation 3 (refer to M. Marx, Makromol. Chem., 16,157(1955); J. Brandrup, E. H. Immergut, Polymer Handbook (3rd edition), Vol 144, Wiley-Interscience, New York, 198):

[Equation 2]

$$\eta_{sp} = \lim_{c \to 0} \frac{r_{sp}}{C}$$

[Equation 3]

$$\eta_{sp} = K_m \times (DP_w)^a$$

In Equation 3, $K_m$ and a are constants that are determined according to the kinds of the polymer and the solvent, and $K_m=0.98\times10^{-2}$ and a=0.9 in the case of polyvinylalcohol and the DMSO solvent.

**2) degree of saponification**

$^1$H-NMR spectrum peaks were measured by using a $^1$H-NMR spectrometer at room temperature after dissolving polyvinylalcohol into DMSO solvent, and the degree of saponification (DS) was calculated according to the following Eqaution 4.

[Equation 4]

$$DS(\%) = \frac{PVA(CH_2 peak)}{PVA(CH_2 peak) + PVAc(CH_2 peak)} \times 100$$

**Properties of the Composite Fiber**

The following properties of the cellulose/polyvinylalcohol composite fibers prepared by Examples 1-4 were measured after conditioning the same at 25 °C and 65 RH% for 24 hours.

**1) elution rate of the polyvinylalcohol**

A solution (50g) that was prepared by dissolving the mixture of cellulose and polyvinylalcohol in the mono-hydrate NMMO with a content of 12 wt% in the reaction bath of 120°C was solidified in pure water (200g) for 2 hours, and after filtering the remaining solution with a G4 glass filter and leaving the solution at room temperature (25°C) for 1 hour, the elution rate of polyvinylalcohol was evaluated by measuring the transmittance by using a UV-Visible spectrometer.

Then, after measuring the transmittance of a remaining solution, which was blank-tested with 12 wt% of cellulose and offsetting the transmittance to 100%, the transmittance of the remaining solution obtained from the mixture of cellulose and polyvinylalcohol was measured. It was determined that more polyvinylalcohol was eluted when the transmittance was low, and the elution rate was calculated according to the following Calculation Formula.

[Calculation Formula]

$$Elution\ rate(\%) = \frac{weight\ of\ eluted\ PVA\ in\ the\ washing\ bath}{weight\ of\ PVA\ in\ the\ mixture\ of\ raw\ material}$$

**2) dry strength, dry elongation, and dry modulus**

After drying specimens at 110˚C for 2 hours to be under the official regain, the dry strength, the dry elongation, and the dry modulus were measured according to the KSK0412 standard with a tensile speed of 300 m/min by using a tensile tester of a low speed elongation type (Instron Co.), wherein the specimens had 8 turns per 10 cm, and the length thereof was 250 cm.

[Table 1]

| classification | | Example 1 | Example 2 | Example 3 | Example 4 | Compara-tive Example 1 | Compara-tive Example 2 | Compara-tive Example 3 | Compara-tive Example 4 | Compara-tive Example 5 |
|---|---|---|---|---|---|---|---|---|---|---|
| Weight ratio of cellulose /PVA | | 95/5 | 95/5 | 80/20 | 90/10 | 100/0 | 95/5 | 99.5 /0.5 | 65/35 | 95/5 |
| PVA | Content of diad groups (%) | 56.0 | 56.6 | 56.0 | 56.0 | - | 49.6 | 56.0 | 56.0 | 56.0 |
| | Degree of saponification (%) | 99.6 | 99.6 | 99.6 | 99.6 | - | 99.6 | 99.6 | 99.6 | 89.0 |
| | Degree of polymerization (DPw) | 4,000 | 1,700 | 4,000 | 4,000 | - | 1,700 | 4,000 | 4,000 | 4,000 |
| Elution rate of PVA (%) | | 0 | 0 | 0 | 0 | 0 | 20 | 0 | 0 | 26 |
| Dry strength (g/d) | | 7.7 | 7.2 | 8.2 | 8.0 | 6.0 | 6.3 | 6.0 | 5.4 | 5.2 |
| Dry modulus (g/d) | | 140 | 139 | 150 | 136 | 136 | 140 | 136 | 130 | 130 |
| Dry elongation (%) | | 8.2 | 7.8 | 8.9 | 8.5 | 5 | 7.9 | 5.1 | 5.5 | 8.4 |
| Industrial value | High:◎<br>Middle: ○<br>Low: Δ | ◎ | ◎ | ◎ | ◎ | ○ | Δ | Δ | Δ | Δ |

As shown in Table 1, Examples 1-4 did not show whitening of the solidifying liquid and the composite fibers thereof had good properties that are suitable for a tire cord, because the syndiotactic PVA having syndiotactic diad groups of 53 to 60% and the degree of saponification of 99.0% or more was mixed with cellulose. However, in the case of Comparative Example 2 using the conventional heterotactic polyvinylalcohol, it was difficult to collect the NMMO because whitening of the solidifying liquid occurred in the solidifying bath, although the properties of the fiber were good.

As shown above, the present invention has advantages that the elution rate of PVA in the washing step is low and it is easy to collect and recycle the solvent, and the properties of the composite fiber, such as dry strength, dry elongation, dry modulus, and so on, are equal to or superior than the conventional cellulose fibers, on account of using the syndiotactic polyvinyl alcohol having a high degree of saponification

## Claims

1. A cellulose/polyvinylalcohol composite fiber, including cellulose and polyvinylalcohol in a weight ratio of 70:30 to 99:1, wherein the polyvinylalcohol includes syndiotactic diad groups in an amount of from 53 to 60% and a degree of saponification thereof is at least 99.0%.

2. The composite fiber according to Claim 1, wherein the cellulose includes α-cellulose in an amount of at least 96%.

3. The composite fiber according to Claim 1, wherein the viscosity-average degree of polymerization of the polyvinylalcohol is from 1500 to 7000.

4. The composite fiber according to Claim 1, having the dry strength of from 6 to 10 g/d, dry elongation of from 6 to 13%, and a dry modulus of from 150 to 400 g/d.

5. A method of preparing a cellulose/polyvinylalcohol composite fiber, including the steps of:

   i) preparing a dope by dissolving a powder mixture of cellulose and synthiotactic polyvinylalcohol in a weight ratio of 70:30 to 99:1 into N-methylmorpholine-N-oxide;
   ii) extrusion spinning the dope through spinning nozzles; and
   iii) washing the spun filaments,
   wherein the polyvinylalcohol includes the syndiotactic diad groups in an amount of from 53 to 60% and the degree of saponification thereof is at least 99.0%.

6. The method according to Claim 5, wherein step iii) washing is carried out so that the elution rate of polyvinylalcohol calculated by the following Calculation Formula is 5% or less:

   [Calculation Formula]

$$Elution\ rate(\%) = \frac{weight\ of\ eluted\ PVA\ in\ the\ washing\ bath}{weight\ of\ PVA\ in\ the\ mixture\ of\ raw\ material}.$$

7. A tire cord prepared by using the cellulose/polyvinylalcohol composite fiber of Claim 1 .

## Patentansprüche

1. Zellulose/Polyvinylalkohol-Verbundfaser, welche Zellulose und Polyvinylalkohol in einem Gewichtsverhältnis von 70:30 bis 99:1 beinhaltet, wobei der Polyvinylalkohol syndiotaktische diadische Gruppen in einer Menge von 53 bis 60 % beinhaltet und deren Verseifungsgrad wenigstens 99,0 % beträgt.

2. Verbundfaser gemäß Anspruch 1, wobei die Zellulose α-Zellulose in einer Menge von wenigstens 96 % beinhaltet.

3. Verbundfaser gemäß Anspruch 1, wobei der viskositätsmittlere Polymerisationsgrad des Polyvinylalkohols 1500 bis 7000 beträgt.

4. Verbundfaser gemäß Anspruch 1, mit einer Trockenfestigkeit von 6 bis 10 g/d, einer Trockendehnung von 6 bis 13

% und einem Trockenmodul von 150 bis 400 g/d.

5. Verfahren zur Herstellung einer Zellulose/Polyvinylalkohol-Verbundfaser, die Schritte beinhaltend:

   i) Herstellen einer Spinnlösung durch Auflösen einer Pulvermischung aus Zellulose und syndiotaktischem Polyvinylalkohol in einem Gewichtsverhältnis von 70:30 bis 99:1 in N-Methylmorpholin-N-oxid,
   ii) Extrusionsspinnen der Spinnlösung durch Spinndüsen und
   iii) Waschen der gesponnenen Filamente,
   wobei der Polyvinylalkohol syndiotaktische diadische Gruppen in einer Menge von 53 bis 60 % beinhaltet und deren Verseifungsgrad wenigstens 99,0 % beträgt.

6. Verfahren gemäß Anspruch 5, wobei Waschen in Schritt iii) derart durchgeführt wird, dass die Elutionsrate an Polyvinylalkohol berechnet durch die folgende Berechnungsformel 5 % oder weniger beträgt:

[Berechnungsformel]

$$\text{Elutionsrate (\%)} = \frac{\textit{Gewicht an eluiertem PVA im Waschbad}}{\textit{Gewicht an PVA in der Rohmaterialmischung}}.$$

7. Reifenkord, hergestellt unter Verwendung der Zellulose/Polyvinylalkohol-Verbundfaser nach Anspruch 1.

## Revendications

1. Fibre composite de cellulose/alcool polyvinylique comprenant une cellulose et un alcool polyvinylique selon un rapport en poids de 70:30 à 99:1, dans laquelle l'alcool polyvinylique comprend des groupes diad syndiotactiques à raison de 53 à 60 % et leur degré de saponification est d'au moins 99,0 %.

2. Fibre composite selon la revendication 1, dans laquelle la cellulose comprend de l'$\alpha$-cellulose à raison d'au moins 96 %.

3. Fibre composite selon la revendication 1, dans laquelle le degré de polymérisation à viscosité moyenne de l'alcool polyvinylique est de 1500 à 7000.

4. Fibre composite selon la revendication 1, ayant une résistance à sec de 6 à 10 g/d, une élongation à sec de 6 à 13 %, et un module à sec de 150 à 400 g/d.

5. Procédé de préparation d'une fibre composite de cellulose/alcool polyvinylique, comprenant les étapes consistant à :

   i) préparer une solution à filer par dissolution d'un mélange en poudre de cellulose et d'alcool polyvinylique synthiotactique selon un rapport en poids de 70:30 à 99:1, dans du N-méthylmorpholine-N-oxyde ;
   ii) filer par extrusion la solution à filer à travers des buses de filage ; et
   iii) laver les filaments filés,
   dans lequel l'alcool polyvinylique comprend des groupes diad syndiotactiques à raison de 53 à 60 % et leur degré de saponification est d'au moins 99,0 %.

6. Procédé selon la revendication 5, dans lequel l'étape de lavage iii) est réalisée afin que la vitesse d'élution de l'alcool polyvinylique calculée par la formule de calcul suivante soit inférieure ou égale à 5 %

Formule de calcul

$$\text{Vitesse d'élution (\%)} = \frac{\text{poids de l'AVP élué dans le bain de lavage}}{\text{poids de l'AVP dans le mélange de matières premières}}$$

**7.** Câble pour pneu préparé en utilisant la fibre composite de cellulose/alcool polyvinylique selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020060133760
- US 2179181 A, Graenacher
- US 4142913 A
- US 4144080 A
- US 4211574 A
- US 5584919 A
- US 3447939 A
- US 3508941 A
- US 4255300 A
- US 6245837 B
- KR 20050003124
- KR 100575378 B1
- KR 1020020077611 A


### Non-patent literature cited in the description


- **WON SEOK LYOO.** *Macromolecules,* 2001, vol. 34, 2964-2972
- **M. MARX.** Makromol. Chem. 1955, vol. 16, 157
- **J. BRANDRUP ; E. H. IMMERGUT.** Polymer Handbook. Wiley-Interscience, 1980, vol. 144